# EUROPÄISCHE PATENTANMELDUNG

(11) **EP 1 646 136 A1**
(43) Veröffentlichungstag der Anmeldung: **12.04.2006**
(21) Anmeldenummer: 04022241.6
(22) Anmeldetag: 17.09.2004
(51) Int. Cl.: H02P 5/68

(54) **Verfahren zur Ansteuerung einer Anzahl von zu einem gemeinsamen Zweck betreibbaren induktiven Lasten**

(71) Anmelder: SIEMENS AKTIENGESELLSCHAFT, 80333 München (DE)
(72) Erfinder: Albert, Michael, 97836 Bischbrunn (DE); Kuschnarew, Christian, 97076 Würzburg (DE); Racky, Bastian, 96049 Bamberg (DE)

(57) **Zusammenfassung**

Die Erfindung betrifft ein Verfahren zur Ansteuerung und ein System mit einer Anzahl von Elektromotoren, die zu einem gemeinsamen Zweck betreibbar sind. Um die Verluste während des Betriebes, insbesondere die Erwärmung der für die Elektromotoren verwendeten Steuerelektronik, zu verringern.

Dabei wird, je nach abgerufener Gesamtleistung, die Last unter Verwendung einer optimierten Ansteuerungsfunktion (K1, K2) auf die Elektromotoren aufgeteilt.

## Beschreibung

Die Erfindung betrifft ein Verfahren zur Ansteuerung einer Anzahl von zu einem gemeinsamen Zweck betreibbaren induktiven Lasten, insbesondere Elektromotoren. Darüber hinaus betrifft die Erfindung ein System mit einer Anzahl von induktiven Lasten, die zu einem gemeinsamen Zweck betreibbar sind.

Bei der Ansteuerung einer induktiven Last, beispielsweise eines Gleichstrommotors durch einen Pulsweitenmodulation-Steller (PWM-Steller) entsteht durch die Taktung der Leistungshalbleiter auf der Versorgungsseite ein Ripplestrom, der üblicherweise zu einem großen Teil durch Elektrolytkondensatoren aufgenommen werden muss. Diese Kondensatoren werden durch den Ripplestrom belastet und erwärmt. Je höher der Effektivwert des Ripplestromes ist, desto größer ist auch die Erwärmung der Kondensatoren.

Eine Aufgabe der vorliegenden Erfindung ist es, die Belastung eines Stellgliedes für eine induktive Last während dessen Betriebes zu verringern. Insbesondere soll die Erwärmung von in einem Stellglied (Elektronik) verwendeten Elektrolytkondensatoren verringert werden. Diese Aufgabe wird durch ein Verfahren nach Anspruch 1 bzw. ein System nach Anspruch 7 gelöst.

Eine Grundidee der Erfindung ist es, für einen gewünschten Einsatzzweck mehrere induktive Lasten, z. B. Elektromotoren zu verwenden. Die verwendeten induktiven Lasten können dabei unabhängig voneinander angesteuert werden. Das Ansteuern der Lasten erfolgt hierzu je nach abgerufener Gesamtleistung unter Verwendung einer optimierten Ansteuerungsfunktion. Durch eine gezielte Ansteuerung mehrerer induktiver Lasten lässt sich eine gewünschte Zielgröße, beispielsweise eine erforderliche Gesamtleistung eines Systems mit mehreren Elektromotoren, erzielen, ohne dass die einzelnen Lasten oder die Bauteile (z. B. Elektrolytkondensatoren oder Transistoren) in kritischen oder unnötig belastenden Betriebszuständen betrieben werden müssen.

Mit anderen Worten ist es beispielsweise möglich, durch den Einsatz von mehr als einem PWM-Steller durch geeignete Ansteuerung der Leistungsschalter die Rippleströme so zu überlagern, dass sich für den bzw. die Elektrolytkondensatoren ein vergleichsweise geringer Ripplestrom ergibt. Die Erwärmung der Elektrolytkondensatoren wird somit verringert und die Gesamtbelastung des Stellgliedes, beispielsweise einer Elektronik, minimiert.

Eine minimale Ripplestrombelastung erhält man bei zwei gleich starken Lasten, wenn die beiden PWM-Steller mit gleichen Duty-Cycles, also bei gleicher Einschaltdauer der induktiven Last bezogen auf die Periodendauer, und einem Phasenversatz von 180 Grad betrieben werden. Sind die Lasten jedoch unterschiedlich, erhält man zwar ebenfalls eine reduzierte Strombelastung, nicht jedoch die minimal mögliche. Zur Bereitstellung einer vorgegebenen Ausgangs-Summenleistung durch zwei induktive Lasten, die an PWM-Stellern betrieben werden, erfolgt erfindungsgemäß für vorzugsweise jeden Betriebspunkt eine Aufteilung der Leistung auf die beiden Lasten durch Einstellen von entsprechenden Duty-Cycles, so dass eine minimale Ripplestrombelastung vorliegt.

Kann mit anderen Worten die gesamte Ausgangsleistung frei oder unter Randbedingungen, beispielsweise einer maximalen Drehzahldifferenz oder dergleichen, auf zwei oder mehr Lasten (Elektromotoren) verteilt werden, so kann die Ripplestrombelastung im Voraus berechnet und minimiert werden. Abhängig von den zum Einsatz kommenden Lasten können somit die verwendeten Elektrolytkondensatoren kleiner dimensioniert werden, so dass die Herstellungskosten hierfür und damit die Gesamtkosten reduziert werden. Alternativ zu einer Kostensenkung kann bei einer Beibehaltung der Dimensionierung eine Erhöhung der Lebensdauer der Bauelemente erzielt werden.

Weitere vorteilhafte Ausführungsformen sind in den Unteransprüchen angegeben und werden nachfolgend anhand eines Ausführungsbeispiels näher erläutert. Hierbei zeigen:
- Fig. 1: ein schematisches Ablaufdiagramm für ein erfindungsgemäßes Verfahren,
- Fig. 2: eine optimierte Kennlinie für den Duty-Cycle d1 eines Doppel-PWM-Stellers,
- Fig. 3: eine optimierte Kennlinie für den Duty-Cycle d2 eines Doppel-PWM-Stellers und
- Fig. 4: eine schematische Darstellung eines erfindungsgemäßen Systems.

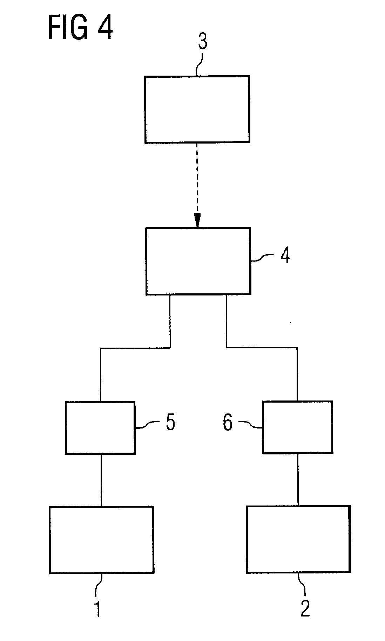

Für zwei vorgegebene Gleichstrommotoren 1, 2, (vgl. Fig. 4) die ein zu einem gemeinsamen Zweck betreibbares Motorensystem bilden, wird zunächst für eine Reihe von Betriebszuständen eine Anzahl von Werten einer Optimierungsgröße bestimmt. Unter dem Begriff Optimierungsgröße wird dabei eine Größe verstanden, welche die zu optimierende Zielgröße beeinflusst. Beispielsweise beeinflusst die Optimierungsgröße "Ripplestrom I_{RPL}" die Zielgröße (den Optimierungsparameter) "Kosten". Bei den Motoren 1, 2 kann es sich beispielsweise um Motorkühler-Gebläsemotoren für ein Kraftfahrzeug handeln. Dabei wird angenommen, dass von den beiden Gleichstrommotoren 1, 2 eine einstellbare Summenleistung zu erbringen ist, wobei die Aufteilung auf die beiden Gleichstrommotoren 1, 2 beliebig sein darf. In einer abgewandelten Ausführung ist die Aufteilung der zu erbringenden Leistung auf die beiden Gleichstrommotoren 1, 2 durch Randbedingungen eingeschränkt.

Im Ausführungsbeispiel werden die Werte der Optimierungsgröße an Hand eines Simulationsmodells ermittelt. Dabei wird der Ripplestrom I_{RPL}, die Verlustleistung P_{VERL} und die mechanische Ausgangsleistung P_{MECH} der Gleichstrommotoren 1, 2 als Funktion der Duty-Cycles d1 und d2 ermittelt. Hierbei wird das gesamte Kennfeld durchfahren, so dass für alle Betriebszustände ein entsprechendes Simulationsergebnis vorliegt. Im beschriebenen Ausführungsbeispiel wird mit anderen Worten vorausberechnet, mit welchen Paarungen von Duty-Cycles d1, d2 man welche Ausgangs-Summenleistung erzielt und welche Belastungen, insbesondere welche Ripplestrombelastung I_{RPL}, dabei hervorgerufen wird. Vorzugsweise werden bei der Simulation auch äußere Einflussgrößen, wie beispielsweise die Batteriespannung des Kraftfahrzeuges oder der Windantrieb des Elektromotors, das so genannte "Windmilling", als Eingangsgrößen berücksichtigt.

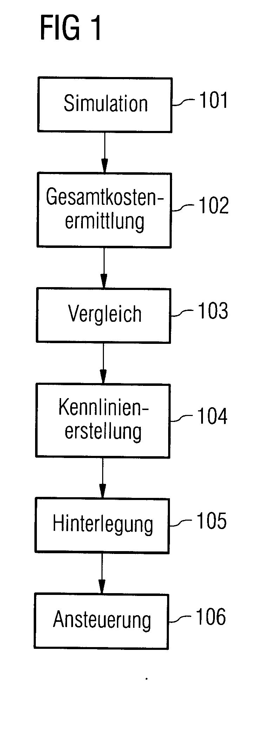

Gemäß Figur 1 erfolgt die Simulation in einem ersten Schritt 101 im Vorfeld des Betriebes des Motorensystems in einem Funktionsmodul 3 (vgl. Fig. 4), beispielsweise mit Hilfe eines Simulationswerkzeuges in Form eines Computerprogrammes, das auf einem Rechner abläuft.

In einem weiteren Schritt wird auf die Simulationsergebnisse ein Optimierungsverfahren angewandt. Dabei werden in einem ersten Unterschritt 102 die Gesamtkosten des Motorbetriebes ermittelt. Die Optimierung wird im Hinblick auf wenigstens einen Optimierungsparameter ausgeführt. Unter dem Begriff Optimierungsparameter wird dabei die zu optimierende Zielgröße verstanden. Im Ausführungsbeispiel wird der Optimierungsparameter durch zwei Kostenfunktionen beschrieben. Dabei dient eine erste Kostenfunktion "EUR pro Watt" zur Beschreibung der Kosten für Leistungshalbleiter entsprechend der während des Betriebes der Gleichstrommotoren 1, 2 erzeugten Verlustleistung P_{VERL}. Eine zweite Kostenfunktion "EUR pro Ampere" dient der Beschreibung der Kosten für die verwendeten Elektrolytkondensatoren, welche einer bestimmten Ripplestromgröße I_{RPL} ausgesetzt sind. Aus den beiden Kostenfunktionen werden die Gesamtkosten des Motorbetriebes in Abhängigkeit von den als Stellgrößen dienenden Duty-Cycles d1, d2 der beiden Gleichstrommotoren ermittelt.

In einem zweiten Unterschritt 103 erfolgt ein Vergleichen sämtlicher Summenwerte der mechanischen Ausgangsleistungen P_{MECH} im Hinblick auf minimale Kosten.

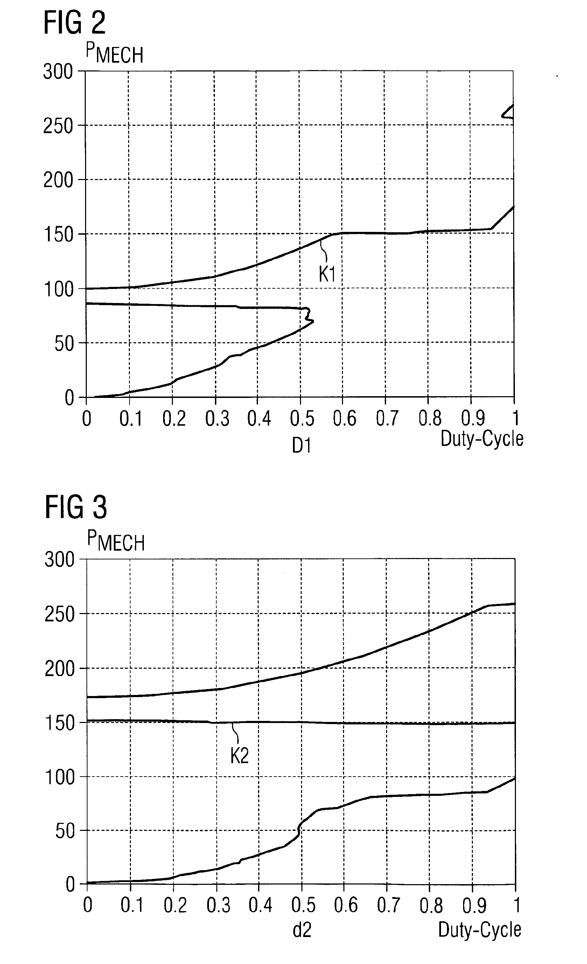

Im Ergebnis dieses Vergleiches werden in einem weiteren Schritt 104 zwei Kennlinien K1, K2 (vgl. Fig. 2 und Fig. 3) für die Duty-Cycles d1, d2 der beiden Gleichstrommotoren 1, 2 erstellt. Die beiden Kennlinien K1, K2 beschreiben mit anderen Worten den entsprechenden Duty-Cycle des einzelnen Gleichstrommotors zur Erlangung einer bestimmten mechanischen Ausgangsleistung P_{MECH} bei minimalen Kosten. Anders ausgedrückt erfolgt eine Festlegung von optimalen Betriebspunkten in Abhängigkeit von der jeweiligen Ausgangs-Summenleistung (Sollwert) der beiden Gleichstrommotoren 1, 2.

Die Ermittlung einer optimierten Ansteuerungsfunktion kann selbstverständlich auch an Hand von anderen Systemgrößen erfolgen. Beispiele für solche Größen sind: Nennleistung, Nenndrehzahl, Wicklungswiderstand, Wicklungsinduktivität, Motorkonstante K_{E}, Motorkonstante K_{I}.

Die Ermittlung der Ansteuerungsfunktionen erfolgt ebenfalls im Vorfeld des Betriebes des Systems, beispielsweise mit Hilfe eines Optimierungswerkzeuges in Form eines Computerprogramms, das auf einem Rechner abläuft.

Die optimierten Kennlinien dienen als Ansteuerungsfunktionen und werden anschließend in einem Ansteuermodul 4 hinterlegt (Schritt 105). Das Ansteuermodul 4 steuert schließlich die Gleichstrommotoren 1, 2 entsprechend der hinterlegten Kennlinien an (Schritt 106). Die Betriebspunkte können durch unterlagerte Regelstrukturen eingestellt werden.

Das Hinterlegen der Ansteuerungsfunktionen geschieht vorzugsweise mit Hilfe so genannter Lookup-Tables. Das Ansteuermodul 4 (vgl. Fig. 4) ist vorzugsweise in Form eines Mikrocontrollers implementiert. Erfolgt die Steuerung der zwei PWM-Steller 5, 6 (vgl. Fig. 4) der beiden Gleichstrommotoren 1, 2 durch einen gemeinsamen Mikrocontroller, werden weder zusätzliche Bauteile noch zusätzliche Signale benötigt.

In den Fig. 2 und 3 sind die optimierten Kennlinien K1, K2 für die Duty-Cycles d1 und d2 abgebildet. Dabei ist die mechanische Ausgangs-Summenleistung P_{MECH} über dem Wert des Duty-Cycles aufgetragen.

Mit anderen Worten sind die Duty-Cycles d1, d2 der PWM-Steller 5, 6 (vgl. Fig. 4) für den ersten und den zweiten Gleichstrommotor 1, 2 in Abhängigkeit von der geforderten Gesamtleistung abgebildet.

Hat beispielsweise der erste Gleichstrommotor 1 eine Maximalleistung von ca. 150 Watt und der zweite Gleichstrommotor 2 eine Maximalleistung von ca. 100 Watt, so ergibt sich eine maximale Ausgangs-Summenleistung von ca. 250 Watt für das Motorensystem.

Bei einer geforderten Ausgangs-Summenleistung, P_{MECH} von 50 Watt würde der erste Gleichstrommotor 1 entsprechend der in Fig. 2 abgebildeten Kennlinie K1 mit einem Duty-Cycle d1 von ca. 0,45 betrieben werden. Dies bedeutet, dass der Leistungsschalter des ersten Gleichstrommotors 1 45% der Zeit einer Taktperiode, also beispielsweise 45% von 50 µs, eingeschaltet ist. Dies bedeutet auch, dass die mittlere Spannung aufgrund von Verlusten geringer ist, beispielsweise das 0,45-fache der Eingangsspannung beträgt. Die Ansteuerung des zweiten Gleichstrommotors 2 erfolgt in diesem Fall entsprechend der Kennlinie K2 mit einem Duty-Cycle d2 von ca. 0,5, vgl. Fig. 3.

Bei einer geforderten Ausgangs-Summenleistung von 100 Watt würde die Ansteuerung des ersten Gleichstromsmotors 1 mit einem Duty-Cycle d1 von ca. 0,0 erfolgen. Mit anderen Worten wäre dieser Motor in diesem Fall nicht in Betrieb, während der zweite Gleichstrommotor 2 mit einem Duty-Cycle d2 von ca. 1,0 angesteuert werden würde. Mit anderen Worten würde dieser Motor dann zu 100% angesteuert werden.

In dieser Art und Weise ergibt sich entsprechend der beiden in den Fig. 2 und 3 abgebildeten optimierten Kennlinien K1, K2 für jeden Betriebspunkt zwischen einer Ausgangs-Summenleistung von 0 Watt und der maximalen Ausgangs-Summenleistung von ca. 250 Watt für jeden der beiden Gleichstrommotoren 1, 2 eine definierte Ansteuerung in Form eines bestimmten Duty-Cycles d1, d2.

## Patentansprüche

1. Verfahren zur Ansteuerung einer Anzahl von zu einem gemeinsamen Zweck betreibbaren induktiven Lasten (1, 2), insbesondere Elektromotoren, **dadurch gekennzeichnet, dass** das Ansteuern der Lasten (1, 2) je nach abgerufener Gesamtleistung unter Verwendung einer optimierten Ansteuerungsfunktion (K1, K2) erfolgt.

2. Verfahren nach Anspruch 1, **gekennzeichnet durch** die Schritte:
- Ermitteln von Werten wenigstens einer Optimierungsgröße für eine Reihe von Betriebszuständen der Lasten (1, 2),
- Ermitteln wenigstens einer optimierten Ansteuerungsfunktion (K1, K2) für die Lasten (1, 2) unter Verwendung dieser Werte, wobei das Optimieren im Hinblick auf wenigstens einen Optimierungsparameter erfolgt.

3. Verfahren nach Anspruch 1 oder 2, **dadurch gekennzeichnet, dass** als Optimierungsgröße eine Ausgangsleistung (insbesondere P_{MECH}) und/oder eine Verlustleistung (P_{VERL}) und/oder ein Ripplestrom (I_{RPL}) verwendet wird.

4. Verfahren nach einem der Ansprüche 1 bis 3, **dadurch gekennzeichnet, dass** das Ermitteln der Optimierungsgröße mit Hilfe eines Simulationswerkzeuges erfolgt.

5. Verfahren nach einem der Ansprüche 1 bis 4, **dadurch gekennzeichnet, dass** als Optimierungsparameter die Betriebskosten und/oder Herstellungskosten und/oder eine Lebensdauer eines Bauelements verwendet werden.

6. Verfahren nach einem der Ansprüche 1 bis 5, **gekennzeichnet durch** den weiteren Schritt:
- Hinterlegen der ermittelten Ansteuerungsfunktion (K1, K2) in einem den Lasten (1, 2) zugeordneten Ansteuermodul (4).

7. Verfahren nach einem der Ansprüche 1 bis 6, **dadurch gekennzeichnet, dass** das Ansteuern durch ein Einstellen der Duty-Cycles (d1, d2) der Lasten (1, 2) zur Erreichung von gewünschten Ziel-Betriebspunkten erfolgt.

8. System mit einer Anzahl von induktiven Lasten (1, 2), insbesondere Elektromotoren, die zu einem gemeinsamen Zweck betreibbar sind, **gekennzeichnet durch** ein Ansteuermodul (4) ausgebildet zum Ansteuern der Lasten (1, 2) je nach abgerufener Gesamtleistung unter Verwendung einer optimierten Ansteuerungsfunktion (K1, K2).

9. System nach Anspruch 8, wobei die Ansteuerungsfunktion (K1, K2) im Hinblick auf wenigstens einen Optimierungsparameter unter Verwendung von Werten wenigstens einer Optimierungsgröße optimiert ist, die für eine Reihe von Betriebszuständen der Lasten (1, 2) ermittelt wurden.

10. System nach Anspruch 8 oder 9, **dadurch gekennzeichnet, dass** die Lasten (1, 2) Gleichstrommotoren sind.

11. System nach einem der Ansprüche 8 bis 10, **dadurch gekennzeichnet, dass** die Lasten (1, 2) unterschiedliche Maximalleistungen aufweisen.

12. System nach einem der Ansprüche 8 bis 11, **gekennzeichnet durch** ein gemeinsames Ansteuermodul (4) für die Lasten (1, 2) .
